# EUROPEAN PATENT SPECIFICATION

(11) **EP 2 152 403 B1**
(45) Date of publication and mention of the grant of the patent: **23.12.2020**
(21) Application number: 08747685.9
(22) Date of filing: 06.05.2008
(51) Int. Cl.: B01J 20/22

(54) **SEPARATION MEDIA AND APPARATUS**
TRENNMEDIEN UND VORRICHTUNG
SUPPORT DE SÉPARATION ET APPAREIL

(30) Priority: 08.05.2007 US 916611 P
(43) Date of publication of application: 17.02.2010
(73) Proprietor: Waters Technologies Corporation, Milford, MA 01757 (US)
(72) Inventor: PIPER, David, Alden, Leominster, MA 01453 (US); KAREH, Joseph, A., Westwood, MA 02090 (US)
(74) Representative: Forresters IP LLP
(86) International application number: PCT/US2008/062737
(87) International publication number: WO 2008/140996

(56) References cited:
- WO-A1-2004/071619
- WO-A1-2006/099509
- WO-A2-2006/130408
- US-A1- 2002 017 493
- US-A1- 2002 070 168
- US-A1- 2003 150 811
- US-A1- 2003 165 941
- US-A1- 2004 007 530
- US-A1- 2004 028 901
- US-A1- 2006 144 770
- US-A1- 2007 256 976
- US-B1- 6 355 165
- DE JONG K P ET AL: "An infrared spectroscopic study of the adsorption of carbon monoxide on silica-supported copper particles", APPLICATIONS OF SURFACE SCIENCE, ELSEVIER BV, NL, vol. 6, no. 3-4, 30 November 1980 (1980-11-30), pages 273-287, XP024459388, ISSN: 0378-5963, DOI: 10.1016/0378-5963(80)90017-3 [retrieved on 1980-11-01]

## Description

### field of the Invention

This invention relates to separation media for selectively absorbing certain chemical species, especially for analytical purposes. The media are useful in liquid chromatography, supercritical fluid chromatography and electrochromatography or electrophoresis, especially for the types of high pressure liquid chromatography and chromatography at extreme pressures of greater than 5,000 pounds per square inch (PSI), nanoflow LC, and microbore LC.

### Background of the Invention

Mixtures comprising components having different chemical structures are frequently separated for analytical or preparative purposes by chromatography. An aliquot of such a mixture may be introduced into a mobile phase (which may be gas, liquid or a supercritical fluid). The mobile phase is caused to flow through a stationary phase comprising separation media. Components of the mixture may interact differently with the separation media and may be retained by it for different periods. Components may therefore elute from the separation media at different times and may be collected or detected by any means responsive to a selected property of the components of interest. As used herein, the term "sample" is directed to the solutions and mixtures which are analysed to determine one or more components of interest.

Mobile phase may be caused to flow through the separation media by virtue of its pressure (if a gas or supercritical fluid), by pumping, or by the influence of an electrical field (in electrochromatography or capillary electrophoresis). A combination of these processes may also be used.

In a related technique, a complex mixture can be separated by depositing it on separation media (typically a gel) supported on a surface, and causing the components comprised in the mixture to migrate through the media by means of an electrical field. A variety of different techniques may then be used to mark the positions of different components in the media after the field has been applied for a given time. Certain components in a complex mixture may also be selectively absorbed on separation media in order to separate them from unwanted components, and then analysed using other techniques, for example mass spectrometry or other spectroscopic techniques.

Chromatographic separation media may comprise small particles packed in a tubular column (usually made of stainless steel or fused silica) or may comprise a coating on the interior wall of a capillary tube. Some current columns comprise particles as small as 1 micron and operate at pressures as high as 15,000 - 100,000 psi. Although these columns generally exhibit greater separation efficiency than columns comprising larger particles, it is thought that still greater efficiency could be realised by the use of separation media more suited to the high pressures used.

In general, the efficiency of all such separation techniques is to some extent dependent on the nature of the separation media. The present invention relates to improved separation media particularly suitable for use at very high pressure of a chromatographic mobile phase, but which also may advantageously be used in a variety of other techniques to improve the separation of components in complex mixtures.

WO 2006/099509 discloses adsorbent magnetic particles used to remove air pollutants.

US 2003/150811 discloses porous inorganic/organic hybrid monolith materials for chromatographic separations.

WO 2004/071619 discloses a chromatography column packed with a mixture of a particulate stationary phase material and a polymeric network of cross-linked poly(diorganosiloxane).

WO 2006/130408 discloses a method for making a fluid-processing apparatus involving mixing a colloidal suspension with a matrix material, applying the mixture to a surface of a conduit, and curing the applied mixture to provide a conductive coating.

De Jong, K. P, et al. (1980), Applications of surface science, 6(3-4), pp. 273-287 discloses silica supported copper particles.

### Summary of the invention

The inventors have found that, particularly in the case of chromatographic separations carried out at very high pressure, increasing the thermal conductivity of prior types of separation media, or adding material of high thermal conductivity to the separation media, improves the separation efficiency of that media. The invention therefore provides improved separation media, as defined in claim 1, for use in the high pressure chromatographic separation of a sample mixture.

A further embodiment of the invention is directed to an apparatus for the high pressure chromatographic separation of a sample mixture comprising a tubular member having an inlet through which a fluid may enter and an outlet through which fluid may leave. The tubular member has an interior space disposed between the inlet and the outlet, wherein there is disposed in such interior space, a separation media as defined in claim 1.

The first particles of a first material comprise particles of siliceous polymers. These particles are coated or uncoated. As used herein, the term "coating" refers to a layer or reaction product of the particle surface with chemical agents to bond chemically functional moieties. Such moieties may comprise alkyl, aryl, phenyl or carbamate groups, or other groups used in prior types of separation media. The first particles are porous or non-porous. The first particles are sized between 1 micron and 100 microns, but most preferably are between 1 and 10 microns. The first particles are any shape including irregular shapes, but preferably are approximately spherical.

The second particles comprise the second material that has a higher thermal conductivity than the material of which the first particles are comprised. The second material is diamond or graphite.

Preferably, the second material has a thermal conductivity greater than 0.5 W.cm⁻¹.°K⁻¹, and, most preferably, greater than 1 W.cm⁻¹.°K⁻¹. Preferably, the thermal conductivity of the second material is approximately tenfold greater than that of the first material.

Preferably, the first and second particles are approximately the same size. The first particles are normally sized as the particles that might be used to prepare prior types of separation media comprising only the first particles.

Preferably, approximately 1% and 25% of separation media comprise the second particles. The remainder of the separation media is the first particles. A more preferred range is between 5% and 20% of the separation media is the second particles; and, more preferred, about 10%.

Preferably, the first particles are responsible for the at least temporary retention of components of a sample by the separation media. The second particles are primarily added to increase the thermal conductivity of the substrate to a value greater than that of the first particles alone, However, those skilled in the art will recognise that the second particles also interact with components of the sample and for at least some of those components to be at least temporarily retained by the second particles.

The inventors have found that by the use of separation media as described, the performance of high-pressure liquid chromatography in particular can be significantly improved. For example, the separation between two chromatographic peaks which are poorly resolved using separation media comprising only the first particles can be significantly improved using separation media comprising high thermal conductivity second particles in addition to the first particles, using otherwise similar chromatographic conditions.

Without wishing to be bound by theory, the inventors believe that the use of separation media according to the invention may reduce the detrimental effect of frictional heating that is thought to take place at very high pressure. It is speculated that the use of separation media having a higher thermal conductivity than that of the first particles alone can reduce the thermal gradients in the mobile phase that are probably caused by this heating and in so doing increase the resolution of the separation.

Other features and advantages of the present invention will be apparent to those skilled in the art upon reading the detailed description and viewing the Figures that follow.

### Brief Description of the Figures

Embodiments of the invention will now be described in detail with reference to the figures, in which:
Figure 1 is a schematic representation of one embodiment of separation media according to the invention;
Figure 2 is a drawing of a chromatographic column according to the invention;
Figure 3 is a drawing of an embodiment of apparatus for the chromatographic separation of a mixture according to the invention;
Figure 4 is a drawing of an embodiment of apparatus for the electrophoretic separation of a mixture according to the invention;
Figure 5 is a drawing of a capillary column according to the invention; and
Figure 6 is a drawing of an embodiment of apparatus according to the invention for selectively absorbing at least one component comprised in a sample mixture.
Figure 7 is a plot of the efficiency of various chromatographic columns operated under ambient temperature conditions against the percentage of diamond particles they contain;
Figure 8 is a plot of the efficiency of various chromatographic columns operated under adiabatic temperature conditions against the percentage of diamond particles they contain; and
Figure 9 is a plot of the efficiencies of two chromatographic columns comprising different percentages of diamond particles against the flow rate of mobile phase.

### Detailed Description of Embodiments of the Invention.

Embodiments of the present invention will be described in detail as to preferred devices, articles of manufacture and methods featuring a separation media. As used herein, unless the context requires otherwise, the term "column" refers to all separation devices having a conduit in which a separation media is placed, including column cartridges and capillaries.

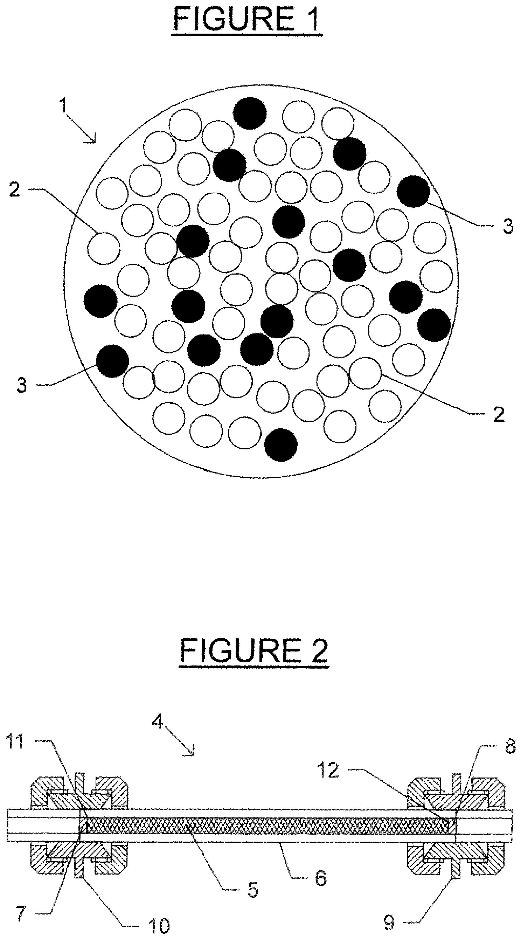

Turning now to Figure 1, a separation media according to the invention, generally designated by the numeral 1, is depicted. The separation media 1 comprises a mixture of first particles 2 (represented by open circles) and second particles 3 (represented by filled circles). The second particles 3 have a higher thermal conductivity than the first particles 2. Preferably, the thermal conductivity of the material comprising the second particle is ten times greater than the material comprising the first particle. For example, the thermal conductivity of the material of the second particles 3 is preferably selected to be greater than 0,1 W.cm⁻¹.°K⁻¹, whereas the thermal conductivity of the material of the first particles 2 is typically about 0.01 W.cm⁻¹.°K⁻¹. The material of the first particle is selected for its affinity for the analyte, The material of the second particle is selected for the thermal conductivity. The addition of the second particles 3 to the first particles 2 increases the thermal conductivity of the separation media 1 beyond that of the first particles 2 alone.

Separation media provided by the invention has utility for chromatographic or electrophoretic separation of components of a sample mixture, or for the selective absorption of one or more components of a mixture on a substrate, typically prior to analysis of the absorbed components by another analytical technique. The first material from which the first particles are made is siliceous polymers, for example polyethoxysilane and others described below.

The first particles are sized between 1 and 100 µm. For chromatographic embodiments, for example reverse-phase liquid chromatography, the first particles are between 1 and 10 µm. For extreme pressure applications, the first particles are sized less than 2 µm. The particles can be any shape including irregular shapes. Preferably, the particles are approximately spherical. The first particles are porous or non-porous, and, preferably, are porous.

The second material, from which the second particles are made, is selected to have a higher thermal conductivity than the first material from which the first particles are made. Typically, the second material may have a thermal conductivity in the range 0.1 - 50 W.cm⁻¹.°K⁻¹. The thermal conductivity of the second material is, preferably, selected to be ten-fold greater than the thermal conductivity of the material of the first particle. A preferred range is 1 - 10 W.cm⁻¹.°K⁻¹, to 1 - 50 W.cm⁻¹.°K⁻¹.

The second material is selected to have as little chromatographic effect. The addition of a second material type may influence peak shape unless the second material is relatively inert under the conditions used for the separation or absorption. The potential detrimental effect on peak shape is addressed by maintaining the concentration of the second particle as low as possible while taking advantage of the thermal conductivity.

The second material is diamond or graphite.

The thermal conductivity of diamond is 10-26 W.cm⁻¹.°K⁻¹. The thermal concuctivity of graphite is 0.25-4.7 W.cm⁻¹.°K⁻¹.
These thermal conductivities may be compared with the values for some commonly used chromatographic separation materials that might be used for the first particles, listed in Table 2 below:

**TABLE 2**

| Approximate thermal conductivities of some chromatographic materials | |
|---|---|
| Particle Material | Thermal Conductivity (W,cm⁻¹,°K⁻¹) |
| Silica | 0.01 |
| Glass | 0.004 - 0.01 |
| Cross-linked styrenes | < 0.005 |

It can be seen from Tables 1 and 2 that the addition of second particles selected from table 1 to those listed in table 2 can markedly increase the thermal conductivity of the resulting media, especially when the second material has a very high thermal conductivity, such as diamond, gold, or certain forms of graphite.

Embodiments of separation media according to the invention suitable for chromatographic separations comprise a mixture of first and second particles comprising, for example, 1% - 25% by volume of the second particles and the remainder substantially comprising the first particles. Preferably, the second particles comprise between 5% and 20% of the separation media. A concentration of second particles of approximately 10% of the separation media is a reasonable compromise with respect to the advantages of reducing thermal gradients and providing an appropriate well defined peak.

A preferred separation media has first particles of a hybrid siliceous polymer and second particles of diamond, or graphite. The hybrid siliceous particles may be a methylpolyethoxysilane (structure I below) or a polyethoxysilane, (structure II below).

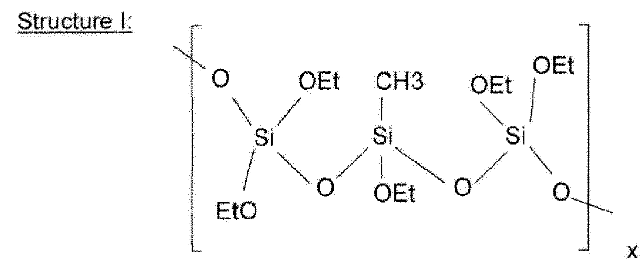

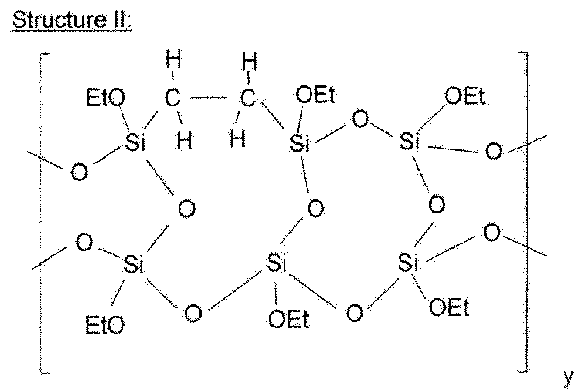

The open valences above are terminal hydrogen, or alkylene, alkynylene, or arylene groups or are bonded to further subgroups of the structures depicted. As used above, x and y are integers from 1 to infinity.

The first particles are represented by the formulae SiO₂/[R²ₚR⁴_{q}SiOₜ]ₙ or

SiO₂/[R⁶(R²ᵣSiOₜ)ₘ]ₙ, where R² and R⁴ are independently C₁ - C₁₈ aliphatic or aromatic moieties, R⁶ is a substituted or unsubstituted C₁ - C₁₈ alkylene, alkynylene, or arylene moiety bridging two or more silicon atoms. The following also applies:
a. p+q = 1 or 2;
b. if p+q = 1, t = 1.5;
c. if p+q = 2, t = 1;
d. r = 0 or 1;
e. if r=0, t = 1.5;
f. if r=1, t=1.
g. m is an integer ≥ 2;
h. n is a number between 0.03 and 1.

These siliceous particles are coated or uncoated. As used herein, the term "coated" refers to having the surface bonded to one or more functional groups. These functional groups are selected for the chromatographic separation to be carried out. For example, their surfaces may be modified with hydrocarbon groups, including alkyl C₈ or C₁₈ groups, phenyl, aryl, or carbamate groups. Methods of preparing and coating these siliceous polymeric particles are disclosed in the above-referenced patent US 6,686,035.

Particles of structure I and sizes between 5 µm and 25 µm are available in the form of "XTerra™" chromatographic columns from Waters Corporation, Milford, MA. Particles of structure II having a size of 1.7 µm are also available in the form of "ACQUITY UPLC®" or "XBridge™" chromatographic columns from Waters Corporation. Both types of particles are available with a variety of organofunctional coatings.

Siliceous polymer separation media according to the invention is made by mixing the polymer particles described above with similar-sized particles selected from Table 2 above. The second material is selected from the group consisting of diamond and graphite.

The media may comprise between 1 and 25% of the second particles. However, about 10% diamond has been found to give good results.

Diamond particles suitable for use in separation media according to the invention comprise natural diamond or high-pressure synthetic diamond manufactured by chemical vapour deposition (CVD) induced by RF, microwave, electron cyclotron resonance (ECR), etc, or by ion sputtering processes. Suitable diamond particles are commercially available, for example from Element Six, Netherlands.

Turning now to Figure 2, apparatus for the chromatographic separation of a mixture, a chromatographic column, generally designated by the numeral 4, is depicted. Column 4 comprises a stainless steel tubular member 6 packed with separation media 5 as described above. The separation media 5 is confined within the tubular member 6 by means of porous frits 7 and 8 respectively located at the inlet 11 and outlet 12 of the tubular member 6. Pipe connections 10 are provided at each end of the tubular member 6 to allow the column to be installed in otherwise conventional liquid chromatographic apparatus.

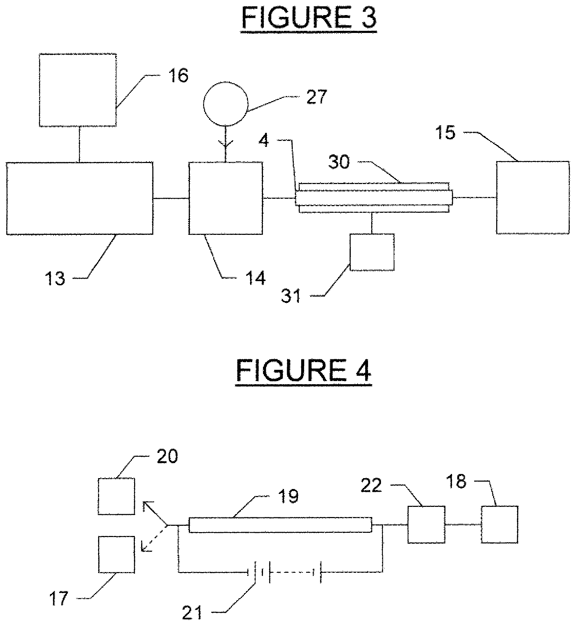

Turning now to Figure 3, a high-pressure liquid chromatography (HPLC) system embodying features of the present invention, generally designated by the numeral 111, is depicted. HPLC analytical system 111 comprises the following major elements: a high-pressure pump 13, a sample injection device 14 and a detector or collector 15. The HPLC system has a chromatographic column 4 in fluid communication with the sample injection device 14, high-pressure pump 13, and detector or collector 15.

The sample injection device 14 is used to introduce a sample from a reservoir 27 into the flow of mobile phase from the pump 13. Constituents of a mobile phase (which may comprise a mixture of several solvents and/or additives) are stored in a reservoir system 16. The pump 13 is provided to pump the mobile phase through the column 4, and may be capable of providing to the column 4 a mobile phase whose composition varies with time, for example to allow gradient elution to be carried out. Eluent from the column 4 is received by a detector or collector system 15.

The HPLC system 111 may be used for either analytical purposes or preparative purposes. If used for analytical purposes, detector system 15 may comprise a detector responsive to at least one of the components comprised in a sample mixture to be analysed. Suitable detectors include UV absorption detectors, evaporative light scattering detectors, refractive index detectors, fluorescence detectors, electrochemical detectors, or mass spectrometric detectors. If the apparatus is to be used to prepare samples of constituents comprised in a sample mixture, detector system 15 may comprise a non-destructive detector such as a UV absorption detector, and a number of vessels or a sample plate comprising a number of wells, each vessel or well for receiving a particular constituent as it elutes from the column 4.

Means may also be provided to minimize the temperature gradient along the axis of the tubular member 6, which may otherwise develop due to the flow of mobile phase through the separation media 5. An insulated jacket 30 comprising a heater and one or more temperature sensors may be disposed around the tubular member 6. A temperature controller 31 may also be provided to control the power supplied to the heater in response to a signal from the one or more temperature sensors so that the temperature of the tubular member 6 is maintained approximately constant along at least a substantial portion of its length. In the alternative, in the event the components being separated are heat sensitive, the heater may be replaced by one or more cooling devices (for example, Peltier effect devices) and the temperature controller 31 adjusted to maintain the temperature of the tubular member 6 below ambient.

Alternative methods of minimizing the temperature gradient along the tubular member 6, comprise, by way of example, without limitation, immersion of tubular member 6 in a temperature-controlled water bath, or subjecting the tubular member 6 to a flow of heated (or cooled) air from a fan.

HPLC systems 111 for carrying out a high-resolution analytical separations are sold by several vendors, such as the ALLIANCE ® and ACQUITY UPLC® systems available form Waters Corporation (Milford, MA). HPLC systems 111 for preparative uses are sold by several vendors such as the Delta 600 fluid handling unit also available from Waters Corporation.

Figure 4 is a schematic drawing of a capillary electrophoresis apparatus, generally designated by the numeral 112. A capillary column 19 (described in detail below) comprising separation media according to the invention is disposed between reservoirs 18 and 20, each containing a buffer solution. A high-voltage power supply 21 is connected as shown to provide a potential difference of up to 30kV (dependent on the nature of the buffer solution and the separation media) across the ends of the column 19. This potential difference provides an electromigratory force that causes the buffer solution to flow from the reservoir 20 to the reservoir 18 via a detector 22. A sample mixture is introduced into a third reservoir 17 that also contains buffer solution. In order to analyse the sample, the power supply 21 is switched off and the reservoir 17 (containing a sample) is substituted in place of the reservoir 20. Power supply 21 is then switched on so that the sample-bearing buffer solution is driven onto the column 19. Reservoir 17 is then replaced by reservoir 20 (containing only the buffer solution). The separation is continued so that the constituents of the sample are separated in time and pass in sequence through the detector 19.

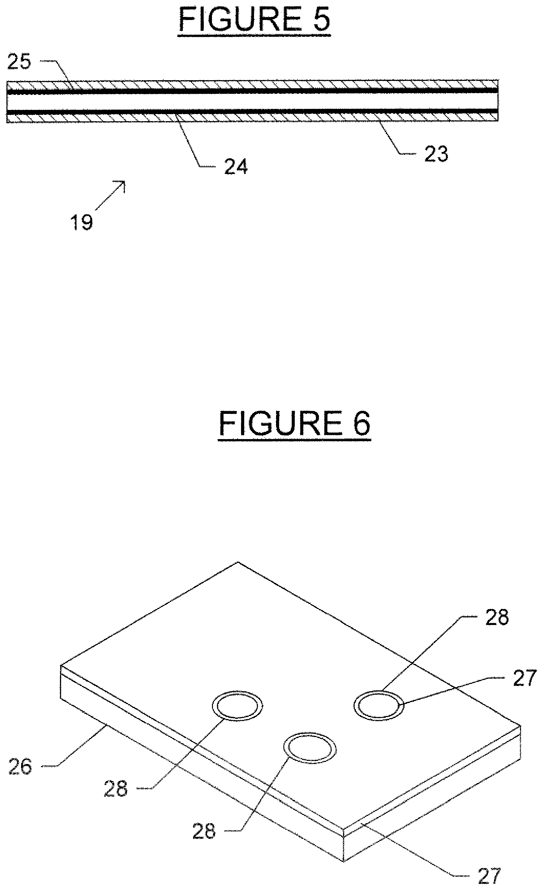

A suitable column 19 for use in the apparatus of figure 4 is shown in figure 5. A fused silica capillary tube 23 has an internal surface 24 on which a coating 25 is applied. The coating 25 may comprise separation media as described. For example, the coating 25 may comprise a mixture of first particles of a siliceous polymer and second particles of diamond. The coating 25 can be applied by any method conventionally employed for coating capillary columns using separation media according to the invention. The capillary tube 23 is between 10 and 100 cm long, a diameter of approximately 25 to 250 µm and an external diameter of 200 to 500 µm. A typical capillary tube 23 has a internal diameter of 75 µm and a external diameter of 375 µm.

One embodiment of the present invention features a capillary columns similar to capillary column 19, shown in figure 5, in place of the column 4 depicted in the apparatus 111 shown in figure 3.

An embodiment of the invention for selectively absorbing one or more constituents of a sample mixture is illustrated in figure 6. It comprises a plate substrate 26 to which a coating 27 is applied. The coating 27 comprises separation media as described above. Substrate 26 is any suitable material such as glass, quartz, silica, stainless steel, synthetic diamond, ceramic materials such as titanium carbide, or a plastic material. The substrate 26 is in the form of a plate, as depicted, or a rod, or a solid body of any convenient shape. Plate 26 has one or more wells 28, the interior of which has a coating 27. Each well 28 is constructed and arranged to receive a fluid sample. The coating 27 is the separation media according to the invention.

The separation media is of any of the forms described, however, for this discussion the separation media will be described as being chemically modified in order to provide selective absorption of a desired chemical species. For example, linker moieties are provided in a manner known in the art to attach antibodies to the surface. The antibodies have specific affinity to selected haptens, often proteins, so that particular proteins can be retained on the coating through an immunological interaction. This embodiment can be used to extract specific chemical species or even specific molecules from a complex mixture for analytical or preparative purposes. The higher thermal conductivity of coatings allow for distribution and dissipation of thermal energy. The plates 26 are used for matrix laser desorption ionization (MALDI) processes.

Disclosed but not claimed is wherein the coating 27 is a gel, for example a polyacrylamide gel, allowing the apparatus to be used for gel electrophoresis. In such an embodiment, the first particles of the invention may comprise polyacrylamide to which second particles of gold or diamond are added to increase the thermal conductivity of the gel.

Substrate 26 of the figure 6 apparatus may be made from the same material used for the coating 27, especially if the material comprises both the first and second particles of the invention and also a filler or a binding agent.

Embodiments of the invention according to figure 6 may be used for MALDI or laser desorption mass spectroscopy, where the improved thermal conductivity of plates according to the invention has been found to be especially valuable. They may also be used as sample receptacles useful in combinatorial chemistry experiments, especially when configured as multiple well plates.

In the alternative, solid substrates 26 according to the invention are be produced in granular or powder form with chemically modified surfaces that allow the grains to selectively adsorb specific types of chemical species. These embodiments may be used to extract species that are selectively absorbed on them from complex mixtures.

### Example

Four 50 mm long chromatographic columns, listed in Table 3 below, were packed using a downward slurry packing method with mixtures of "ACQUITY UPLC®" 1.7µm BEH particles (structure II above, and available from Waters corporation, Milford, MA) and various proportions of non-porous, irregularly shaped 1.5 - 2.5 µm diamond particles.

**TABLE 3**

| Col. No | Internal diameter (mm) | % of diamond particles |
|---|---|---|
| 1 | 3.0 | 0 |
| 2 | 3.0 | 1 |
| 3 | 3.0 | 5 |
| 4 | 3.0 | 10 |

For the following experiments, a mobile phase comprising 65% acetonitile, 35% water was used. A test sample comprising 9.6µg/ml thiourea, 0.77mg/ml toluene, 96µg/ml naphthalene, 384µg/ml acenaphthene, 500µg/ml benzene, 0.1µl/ml heptanophenone and 3µl/ml amylbenzene, was used to obtain the results listed below. A sample loop of 2µl volume was employed, and detection was by a UV absorbance detector tuned to 254nm. A Waters corporation "ACQUITY UPLC®" pump system was used.

Data relevant to the performance of the four columns is listed in Table 4. The figures in table 4 relate to the heptanophenone component in the test sample. Data relating to "ambient" operation was obtained with the external surface of the columns in contact with ambient air, whereas the "adiabatic" data was obtained with the columns insulated from ambient air by layers of glass fibre tape. The retention factors listed have been corrected for extra-column contributions.

**TABLE 4**

| Col. No. | Retention Factor (Ambient) | Theoretical Plates (Ambient) | Retention Factor (Adiabatic) | Theoretical Plates (Adiabatic) |
|---|---|---|---|---|
| 1 | 6.19 | 11493 | 6.16 | 12813 |
| 2 | 6.18 | 10259 | 6.05 | 11325 |
| 3 | 5.98 | 12487 | 6.04 | 13360 |
| 4 | 5.93 | 14103 | 5.087 | 14051 |

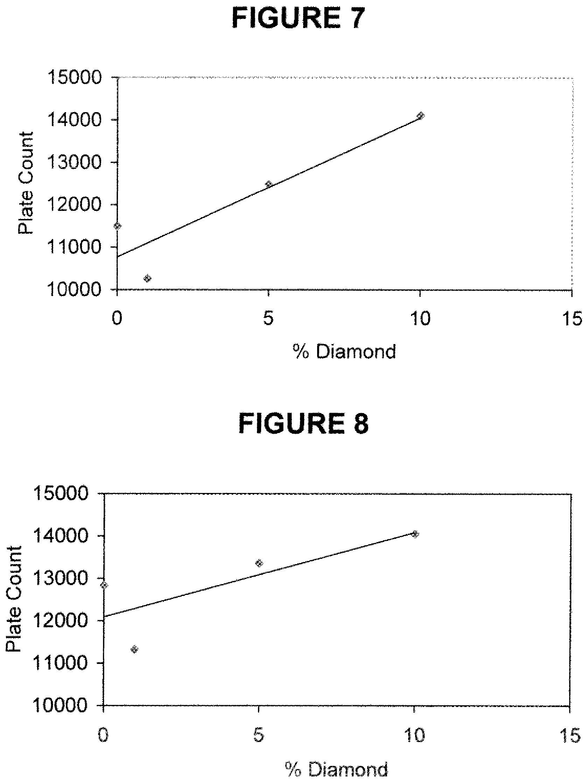

Figures 7 and 8 are plots of the column efficiency (as represented by the number of theoretical plates) against the percentage of diamond particles for columns 1-4 under ambient and adiabatic conditions, respectively. They, and the other figures in Table 4, show a clear trend of higher column efficiencies with the increasing percentage of diamond particles in the columns, particularly for the columns operated under "ambient" conditions (Figure 7).

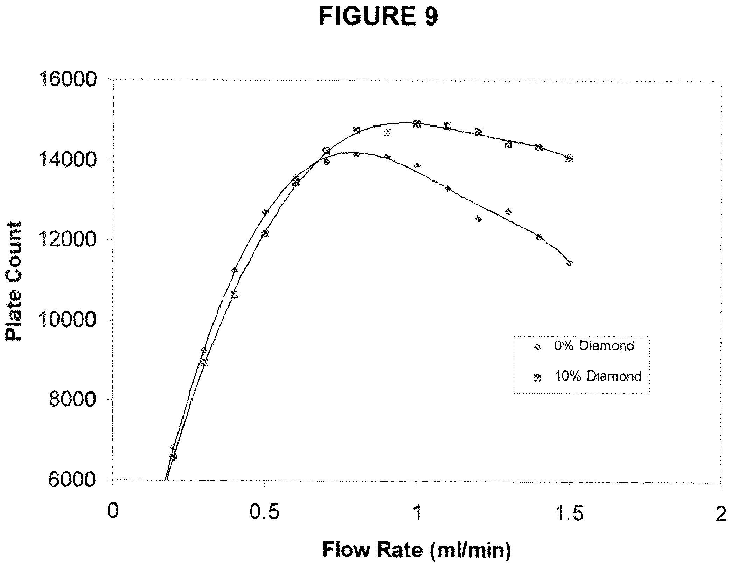

Figure 9 is a plot showing the variation of column efficiency (as represented by the number of theoretical plates) with the flow rate of mobile phase, based on an analysis of the results for column no. 1 (comprising no diamond particles) and column no 4 (comprising 10% diamond particles), operated under "ambient" conditions. It is clear that the efficiency of column 4 is greater than that of column 1 at all but the lowest flow rates.

Figures 7 and 8 also show that greater increases in column efficiency are obtained when columns are operated under "ambient" temperature conditions than under "adiabatic" conditions.

## Claims

1. Separation media for use in the high pressure chromatographic separation of a sample mixture, said separation media comprising first particles of a first material and second particles of a second material, said first particles being sized between 1 and 100 µm, said first particles being capable of at least temporarily retaining at least one component of a sample mixture, and said second material being selected to have a higher thermal conductivity than said first material, wherein said first material comprises a siliceous polymer represented by (i) the formula SiO₂/[R²ₚR⁴_{q}SiOₜ]ₙ, where R² and R⁴ are independently C₁ - C₁₈ aliphatic or aromatic moieties, p+q = 1 or 2, provided that t = 1.5 if p+q = 1 and t = 1 if p+q = 2, and n is a number between 0.03 and 1, or (ii) the formula SiO₂/[R⁶(R²ᵣSiOₜ)ₘ]ₙ, where R² is C₁ - C₁₈ aliphatic or aromatic moiety, R⁶ is a substituted or unsubstituted C₁ - C₁₈ alkylene, alkynylene, or arylene moiety bridging two or more silicon atoms, r = 0 or 1, provided that t = 1.5 if r = 0 and t = 1 if r = 1, m is an integer ≥ 2, and n is a number between 0.03 and 1; and said second material is selected from the group consisting of diamond and graphite.

2. Separation media as claimed in claim 1, wherein said first material comprises a siliceous polymer having a structure represented by: 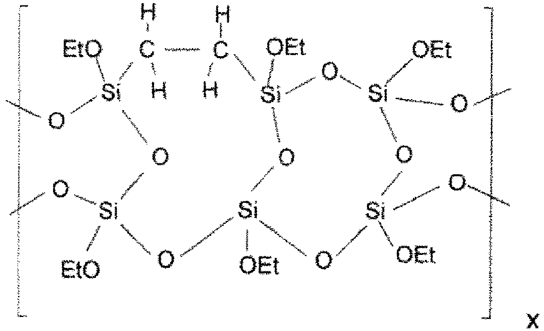 wherein the open valences above are terminal hydrogen, or alkylene, alkynylene, or arylene groups or are bonded to further subgroups of the structure depicted, and x is an integer from 1 to infinity.

3. Separation media as claimed in claim 1, wherein said first material comprises a siliceous polymer having a structure represented by: 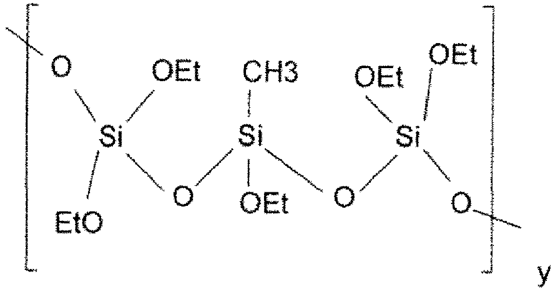 wherein the open valences above are terminal hydrogen, or alkylene, alkynylene, or arylene groups or are bonded to further subgroups of the structure depicted, and y is an integer from 1 to infinity.

4. Separation media as claimed in claim 1, wherein said first particles comprise surfaces modified with functional moieties selected from the group comprising alkyl moieties, phenyl moieties, aryl moieties, or carbamate moieties.

5. Apparatus for the high pressure chromatographic separation of a sample mixture comprising a tubular member having an inlet which is configured to allow that a fluid may enter and an outlet which is configured to allow that fluid may leave, said tubular member having an interior space disposed between said inlet and said outlet, wherein there is disposed in said interior space separation media as claimed in any one of claims 1 to 4.

6. Apparatus as claimed in claim 5, further comprising means for minimizing any temperature gradient in an axial direction along said tubular member.

7. Apparatus as claimed in claim 6, wherein said means for minimizing any temperature gradient comprises an insulated jacket surrounding said tubular member and fitted with at least one heater and at least one temperature sensor, and a temperature controller responsive to signals from said at least one temperature sensor, said temperature controller for supplying and controlling power to said at least one heater.

8. Apparatus as claimed in claim 6, wherein said means for minimizing any temperature gradient comprises an insulated jacket surrounding said tubular member and fitted with at least one cooling device and at least one temperature sensor, and a temperature controller responsive to signals from said at least one temperature sensor, said temperature controller for supplying and controlling power to said at least one cooling device.

## Patentansprüche

1. Trennmedien zur Verwendung bei der hochdruckchromatographischen Trennung einer Probenmischung, wobei die Trennmedien erste Teilchen aus einem ersten Material und zweite Teilchen aus einem zweiten Material umfassen, wobei die ersten Teilchen eine Größe zwischen 1 und 100 µm aufweisen, wobei die ersten Teilchen in der Lage sind, mindestens eine Komponente einer Probenmischung zumindest vorübergehend zurückzuhalten, und wobei das zweite Material so ausgewählt ist, dass es eine höhere Wärmeleitfähigkeit als das erste Material aufweist, wobei das erste Material ein siliciumdioxidhaltiges Polymer umfasst, das repräsentiert wird durch (i) die Formel SiO₂/[R²_{P}R⁴_{q}SiOₜ]ₙ, wobei R² und R⁴ unabhängig voneinander aliphatische oder aromatische C₁ - C₁₈-Reste sind, p+q = 1 oder 2, vorausgesetzt, dass t = 1,5, wenn p+q = 1 und t = 1, wenn p+q = 2, und n eine Zahl zwischen 0,03 und 1 ist, oder (ii) die Formel SiO₂/[R⁶(R²ᵣSiOₜ)ₘ]ₙ, wobei R² ein aliphatischer oder aromatischer C₁ - C₁₈-Rest ist, R⁶ ein substituierter oder unsubstituierter C₁ - C₁₈-Alkylen-, -Alkinylen- oder -Arylenrest ist, der zwei oder mehr Siliciumatome überbrückt, und r = 0 oder 1, vorausgesetzt, dass t = 1,5, wenn r = 0 und t = 1, wenn r = 1, m eine ganze Zahl ≥ 2 ist und n eine Zahl zwischen 0,03 und 1 ist; und
wobei das zweite Material aus der Gruppe ausgewählt ist, die aus Diamant und Graphit besteht.

2. Trennmedien nach Anspruch 1, wobei das erste Material ein siliciumdioxidhaltiges Polymer mit einer Struktur umfasst, repräsentiert durch: 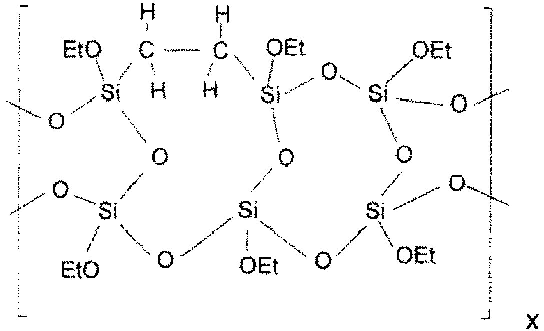 wobei die obigen offenen Valenzen endständige Wasserstoff- oder Alkylen-, Alkinylen- oder Arylengruppen sind oder an weitere Untergruppen der dargestellten Struktur gebunden sind, und x eine ganze Zahl von 1 bis unendlich ist.

3. Trennmedien nach Anspruch 1, wobei das erste Material ein siliciumdioxidhaltiges Polymer mit einer Struktur umfasst, repräsentiert durch: 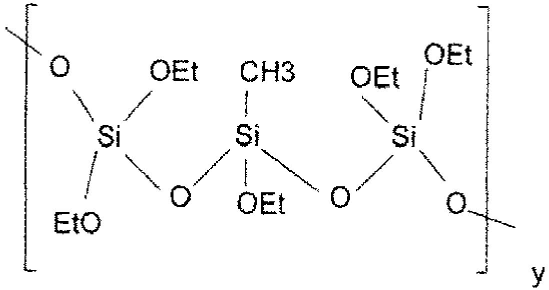 wobei die obigen offenen Valenzen endständige Wasserstoff- oder Alkylen-, Alkynylen- oder Arylengruppen sind oder an weitere Untergruppen der dargestellten Struktur gebunden sind, und y eine ganze Zahl von 1 bis unendlich ist.

4. Trennmedien nach Anspruch 1, wobei die ersten Partikel Oberflächen umfassen, die mit funktionellen Resten modifiziert sind, die aus der Gruppe ausgewählt sind, die Alkylreste, Phenylreste, Arylreste oder Carbamatreste umfasst.

5. Vorrichtung für die hochdruckchromatographische Trennung einer Probenmischung, umfassend ein rohrförmiges Element mit einem Einlass, der konfiguriert ist, um ein Eintreten eines Fluids zu ermöglichen, und einem Auslass, der konfiguriert ist, um ein Austreten des Fluids zu ermöglichen, wobei das rohrförmige Element einen Innenraum aufweist, der zwischen dem Einlass und dem Auslass angeordnet ist, wobei in dem Innenraum Trennmedien nach einem der Ansprüche 1 bis 4 angeordnet sind.

6. Vorrichtung nach Anspruch 5, ferner umfassend Mittel zur Minimierung jeglicher Temperaturgradienten in axialer Richtung entlang des rohrförmigen Elements.

7. Vorrichtung nach Anspruch 6, wobei die Mittel zum Minimieren eines Temperaturgradienten einen isolierten Mantel, der das rohrförmige Element umgibt und mit mindestens einem Heizelement und mindestens einem Temperatursensor ausgestattet ist, und einen Temperaturregler, der auf Signale von dem mindestens einen Temperatursensor anspricht, umfassen, wobei der Temperaturregler zum Zuführen und Steuern von Leistung zu dem mindestens einen Heizelement dient.

8. Vorrichtung nach Anspruch 6, wobei die Mittel zum Minimieren eines Temperaturgradienten einen isolierten Mantel, der das rohrförmige Element umgibt und mit mindestens einer Kühleinheit und mindestens einem Temperatursensor ausgestattet ist, und einen Temperaturregler, der auf Signale von dem mindestens einen Temperatursensor anspricht, umfassen, wobei der Temperaturregler zum Zuführen und Steuern von Leistung zu der mindestens einen Kühleinheit dient.

## Revendications

1. Support de séparation destiné à être utilisé dans la séparation chromatographique à haute pression d'un mélange d'échantillon, ledit support de séparation comprenant des premières particules d'un premier matériau et des secondes particules d'un second matériau, lesdites premières particules étant dimensionnées entre 1 et 100 µm, lesdites premières particules étant capables de retenir au moins temporairement au moins un composant d'un mélange d'échantillon, et ledit second matériau étant choisi de manière à présenter une conductivité thermique plus élevée que celle dudit premier matériau, ledit premier matériau comprenant un polymère siliceux représenté par (i) la formule SiO₂/[R²ₚR²_{q}SiOₜ]ₙ, où R² et R⁴ sont indépendamment des groupements aliphatiques ou aromatiques en C₁ à C₁₈, p + q = 1 ou 2, à condition que t = 1,5 si p + q = 1 et t = 1 si p + q = 2, et n est un nombre compris entre 0,03 et 1, ou (ii) la formule SiO₂/[R⁶(R²ᵣSiOt)ₘ]ₙ, où R² est un groupement aliphatique ou aromatique en C₁ à C₁₈, R⁶ est un groupement alkylène, alcynylène ou arylène en C₁ à C₁₈ substitué ou non substitué reliant deux ou plusieurs atomes de silicium, r = 0 ou 1, à condition que t = 1,5 si r = 0 et t = 1 si r = 1, m est un nombre entier ≥ 2, et n est un nombre compris entre 0,03 et 1 ;
et ledit second matériau étant choisi dans le groupe constitué par le diamant et le graphite.

2. Support de séparation selon la revendication 1, ledit premier matériau comprenant un polymère siliceux ayant une structure représentée par : 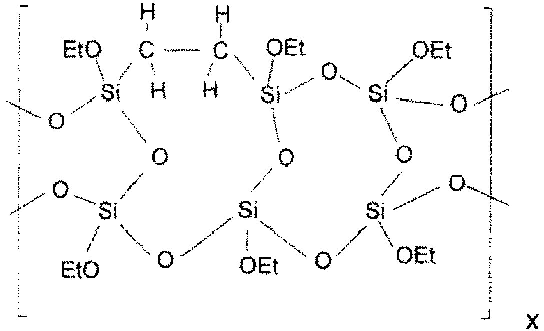 les valences ouvertes ci-dessus étant des groupes terminaux hydrogène, alkylène, alcynylène ou arylène ou étant liées à d'autres sous-groupes de la structure représentée, et x étant un nombre entier allant de 1 à l'infini.

3. Support de séparation selon la revendication 1, ledit premier matériau comprenant un polymère siliceux ayant une structure représentée par : 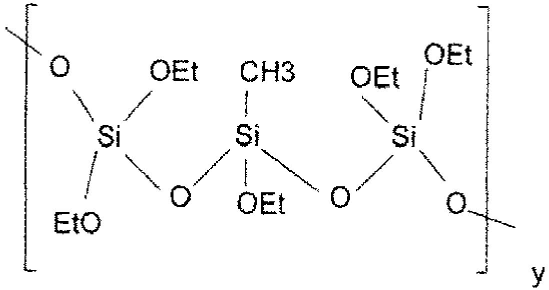 les valences ouvertes ci-dessus étant des groupes terminaux hydrogène, alkylène, alcynylène ou arylène ou étant liées à d'autres sous-groupes de la structure représentée, et y étant un nombre entier allant de 1 à l'infini.

4. Support de séparation selon la revendication 1, lesdites premières particules comprenant des surfaces modifiées avec des groupements fonctionnels choisies dans le groupe comprenant des groupements alkyle, des groupements phényle, des groupements aryle ou des groupements carbamate.

5. Appareil pour la séparation chromatographique à haute pression d'un mélange d'échantillon comprenant un élément tubulaire ayant une entrée qui est conçue pour permettre à un fluide de pénétrer et une sortie qui est conçue pour permettre à ce fluide de sortir, ledit élément tubulaire ayant un espace intérieur disposé entre ladite entrée et ladite sortie, étant disposé, dans ledit espace intérieur, un support de séparation selon l'une quelconque des revendications 1 à 4.

6. Appareil selon la revendication 5, comprenant en outre un moyen destiné à minimiser tout gradient de température dans une direction axiale le long dudit élément tubulaire.

7. Appareil selon la revendication 6, ledit moyen destiné à minimiser tout gradient de température comprenant une enveloppe isolée entourant ledit élément tubulaire et équipée d'au moins un dispositif de chauffage et d'au moins un capteur de température, et un dispositif de commande de température sensible aux signaux provenant dudit au moins un capteur de température, ledit dispositif de commande de température étant destiné à fournir et à commander l'énergie audit au moins un dispositif de chauffage.

8. Appareil selon la revendication 6, ledit moyen destiné à minimiser tout gradient de température comprenant une enveloppe isolée entourant ledit élément tubulaire et équipée d'au moins un dispositif de refroidissement et d'au moins un capteur de température, et un dispositif de commande de température sensible aux signaux provenant dudit au moins un capteur de température, ledit dispositif de commande de température étant destiné à fournir et à commander l'énergie audit au moins un dispositif de refroidissement.
